# EUROPÄISCHE PATENTSCHRIFT

(11) **EP 0 790 445 B1**
(45) Veröffentlichungstag und Bekanntmachung des Hinweises auf die Patenterteilung: **22.03.2000**
(21) Anmeldenummer: 96117922.3
(22) Anmeldetag: 08.11.1996
(51) Int. Cl.: F16J 15/32

(54) **Radialwellendichtring**
Radial shaft seal
Joint à lèvre radiale

(30) Priorität: 15.02.1996 DE 19605550
(43) Veröffentlichungstag der Anmeldung: 20.08.1997
(73) Patentinhaber: Firma Carl Freudenberg, 69469 Weinheim (DE)
(72) Erfinder: Eckel, Hans-Gerd, Dr., 69514 Laudenbach (DE); Kunkel, Anja, 69483 Siedelsbrunn (DE)

(56) Entgegenhaltungen:
- EP-A- 0 565 771
- DE-A- 4 212 973
- DE-A- 4 422 223
- DE-B- 2 340 275
- DE-C- 4 224 995
- US-A- 4 575 104

## Beschreibung

Die Erfindung betrifft eine Dichtungsanordnung mit einer vor Gebrauch auf einer Stützhülse abgestützten, ringförmigen Dichtlippe sowie einem Sensorring, der die Dichtlippe und die Stützhülse an dem von dem abgedichteten Raum abgewandten Ende mit einem Flansch in radialer Richtung nach innen greift.

Dichtungsanordnungen der vorgenannten Art gelangen im Bereich der Kurbelwellenabdichtung von Kraftfahrzeugen zur Anwendung. Sie bestehen aus zwei separat erzeugten und unabhängig voneinander montierten Einheiten, nämlich einer Dichtungseinheit, die eine ringförmig ausgebildete Dichtlippe umfaßt und während der bestimmungsgemäßen Verwendung in Eingriff mit der abzudichtenden Kurbelwelle gelangt sowie einem Sensorring von winkelförmigen Profil, der unverdrehbar mit der Welle verbunden wird und den Zweck hat, Drehbewegungen der Welle zu erfassen und für die Steuerung von Motorfunktionen nutzbar zu machen. Die Dichtungseinheit ist in mechanischer Hinsicht sehr empfindlich. Sie umfaßt insbesondere eine Dichtlippe aus polymerem Werkstoff, die beim Aufschieben auf das stirnseitige Ende einer Kurbelwelle durch dieses verletzt werden kann und funktionsunfähig wird. Das Problem ist insofern besonders gravierend, weil sich entsprechende Fehler nur äußerst schwierig detektieren lassen.

Um diesem Mangel abzuhelfen ist bereits vorgeschlagen worden, die Dichtlippe bis zum Gebrauch der Dichtungseinheit auf einer hohlzylindrischen Stützhülse abzustützen, die den selben Außendurchmesser hat wie die abzudichtende Kurbelwelle. Zur Montage der Dichtungseinheit ist es hierbei vorgesehen, zunächst die Stützhülse auf dem stirnseitigen Ende der Kurbelwelle aufzusetzen und die Dichtungseinheit nachfolgend von der Stützhülse auf das Kurbelwellendende aufzuschieben. Die Stützhülse wird dabei freigegeben. Ihre Entfernung ist mit einem separaten Arbeitsschritt verbunden.

Für die Funktion des Sensorringes ist es ebenfalls von entscheidender Bedeutung, daß dieser unter Vermeidung von Beschädigungen zum Einbau gelangt. In mechanischer Hinsicht besonders empfindlich sind die im Bereich des Außenumfangs angeordneten, klein dimensionierten und in geringen Abständen aufeinanderfolgenden, zahnförmigen Erhebungen. Es kann jedoch auch ein anvulkanisierter Ring aus elastomerem Werkstoff zur Anwendung gelangen, der in radialer Richtung mit abwechselnden Polen N-S magnetisiert ist.

Während der bestimmungsgemäßen Verwendung wird der Sensorring in allen Fällen in einem sehr geringer Spaltabstand an einem Sensor vorbeigeführt. Er generiert dabei in dem Sensor Signale, die für die Motorsteuerung benötigt werden. Deformierungen des Sensorrings haben eine Beeinträchtigung der Qualität der Signale zur Folge. Sie müssen daher unter allen Umständen vermieden werden, was besondere Schutzvorkehrungen während des Transports, der Lagerung und der Montage erfordert.

Der Erfindung liegt die Aufgabe zugrunde, ein Dichtungsanordnung der eingangs genannten Art zu zeigen, die robust ist in bezug auf Belastungen, die sich während der Lagerung, des Transports und der Montage ergeben, die leicht montierbar ist und die es weitestgehend ausschließt, daß sich Beschädigungen der Dichtlippe und/oder des Sensorrings ergeben.

Erfindungsgemäß ist es zur Lösung der Aufgabe vorgesehen, daß der Sensorring, bezogen auf die Dichtlippe, axial verschiebbar ist, daß die Stützhülse durch zumindest drei in Umfangsrichtung aneinander stoßende, relativ bewegliche Segmente gebildet ist und daß die Segmente an dem Sensorring in axialer Richtung unverrückbar und in radialer Richtung nach außen verschiebbar festgelegt sind und daß die Stützhülse an dem dem abgedichteten Raum zugewandten Ende zum erleichterten Einfügen des Wellenendes einen ein hohlkegelig erweiterten Innendurchmesser und/oder Wellenende einen in entgegengesetzter Richtung kegelig verjüngten Außendurchmesser hat. Beim Aufsetzen der Dichtungsanordnung auf das Wellenende ergibt sich automatisch eine konzentrische Zuordnung zu dem Wellenende. Im Anschluß daran ist es lediglich erforderlich, die Dichtungseinheit in Richtung des abgedichteten Raumes zu verlagern und auf das Wellenende aufzuschieben. Dabei werden die Stützhülse bildenden Segmente automatisch aus der Dichtlippe herausgezogen und schließlich in eine Position überführt, in der sie zwischen dem entsprechenden Innendurchmesser des Sensorrings und dem Außendurchmesser der Kurbelwelle festgelegt sind. Sie brauchen anschließend nicht mehr separat entfernt zu werden und können während der bestimmungsgemäßen Verwendung in der Dichtungsanordnung verbleiben. Der Sensorring wird während der Lagerung, des Transports und der Montage in ausgezeichneter Weise ausgesteift durch die von der Dichtlippe aneinander gepreßten Segmente der Stützhülse. Die Gefahr der Entstehung von Deformierungen ist dadurch deutlich vermindert. Außerdem besteht die Möglichkeit, die in der Dichtungsanordnung enthaltene Dichtungseinheit so zu gestalten, daß die empfindlicheren Teile des Sensorringes zumindest vor Gebrauch in einer radial nach außen abgeschlossenen Ausnehmung des Außenteils aufgenommen und hierdurch vor Beschädigungen geschützt sind. Für eine ordnungsgemäße Montage ist es folglich nicht mehr nötig, besondere Schutzmaßnahmen zu ergreifen oder im Anschluß daran eine Nachkontrolle durchzuführen.

Als vorteilhaft hat es sich bewährt, wenn der Sensorring im Bereich des Flansches mit Radialführungen zur Festlegung der Segmente versehen ist. Die Herstellung gestaltet sich dabei besonders einfach, wenn die Radialführungen durch sich in radialer Richtung erstreckende Aufnahmen der Segmente gebildet sind sowie durch Laufschienen des Sensorringes, die von dem Aufnahmen zumindest teilweise umgriffen sind. Üblicherweise besteht der Sensorring aus metallischem Werkstoff. Die Segmente können bedarfsweise aus Kunststoff bestehen, beispielsweise aus Polyamid. Sie lassen sich in diesem Falle besonders kostengünstig erzeugen.

Die Laufschienen können einen Bestandteil des Flansches bilden und beispielsweise zumindest in Umfangsrichtung durch Ausstanzungen des Flansches begrenzt sein. Auch ihre Ausbildung ist im Rahmen einer Massenproduktion somit nicht mit besonderem Aufwand verbunden.

Nach einer weiteren Ausgestaltung ist es vorgesehen, daß der Flansch radial innerhalb der Radialführung mit zumindest einer Mitnehmerfläche versehen und durch die Mitnehmerfläche unverdrehbar an dem Ende der abzudichtenden Welle festlegbar ist. Die Mitnehmerfläche kann gegebenenfalls einen Bestandteil einer Durchbrechung bilden, beispielsweise einer Bohrung oder einer Ausstanzung. Letztere kann gegebenenfalls im Zusammenhang der Herstellung des Sensorringes im Rahmen eines Tiefziehprozesses erzeugt sein. Die Erzeugung ist in solchen Fällen somit ebenfalls ohne besonderen Aufwand möglich.

Bei einer Ausführung, bei der das dem abzudichtenden Raum zugewandte Ende der Stützhülse innenseitig durch eine hohlkegelige Fläche begrenzt ist hat es sich als vorteilhaft bewährt, wenn der Innendurchmesser dem Außendurchmesser durch eine hohlkegelige Ausbildung im Bereich des Endes der Stützhülse angenähert ist. Das Profil des Endes kann leicht gerundet sein, um eine Beschädigung beim Aufschieben der Dichtlippe zu vermeiden. Die Ausbildung ist von erheblicher praktischer Bedeutung insofern, als es bei einer entsprechenden Ausbildung gelingt, die äußere Begrenzungsfläche der abzudichtenden Welle und die äußere Begrenzungsfläche der Stützhülse während des Montagevorgangs unter Vermeidung jeglicher Unterbrechungen kontinuierlich ineinander übergehen zu lassen. Bei der Relativverlagerung der Dichtlippe aus dem Bereich der Stützhülse in den Bereich des Wellenendes ist es dadurch ziemlich ausgeschlossen, daß sich Beschädigungen der Dichtlippe ergeben.

Bei der Herstellung technischer Produkte an verschiedenen Stellen ist es weitgehend ausgeschlossen, daß eine völlige Übereinstimmung angestrebter Maße erreicht wird. Es ist deshalb üblich, gewisse Toleranzen vorzusehen. Unter diesen Gesichtspunkten hat es sich als vorteilhaft bewährt, wenn der Außendurchmesser der Stützhülse größer bemessen ist als der Außendurchmesser der abzudichtenden Welle. Um eine Überdehnung der Dichtlippe zu vermeiden ist es erforderlich, den Durchmesserunterschied in Abhängigkeit vom jeweiligen Werkstoff gering zu bemessen. Ein Übermaß von 1/10 mm ist im allgemeinen ausreichend. Auch bei einer ungünstigen Durchmesserpaarung wird es dadurch ausgeschlossen, daß die Dichtlippe beim Aufschieben auf das Wellenende mit einer radial nach außen vorstehenden Stufe in Eingriff gelangen und hierdurch beschädigt werden kann.

Die Erfindung wird nachfolgend durch die Zeichnung weiter verdeutlicht.

Es zeigen:

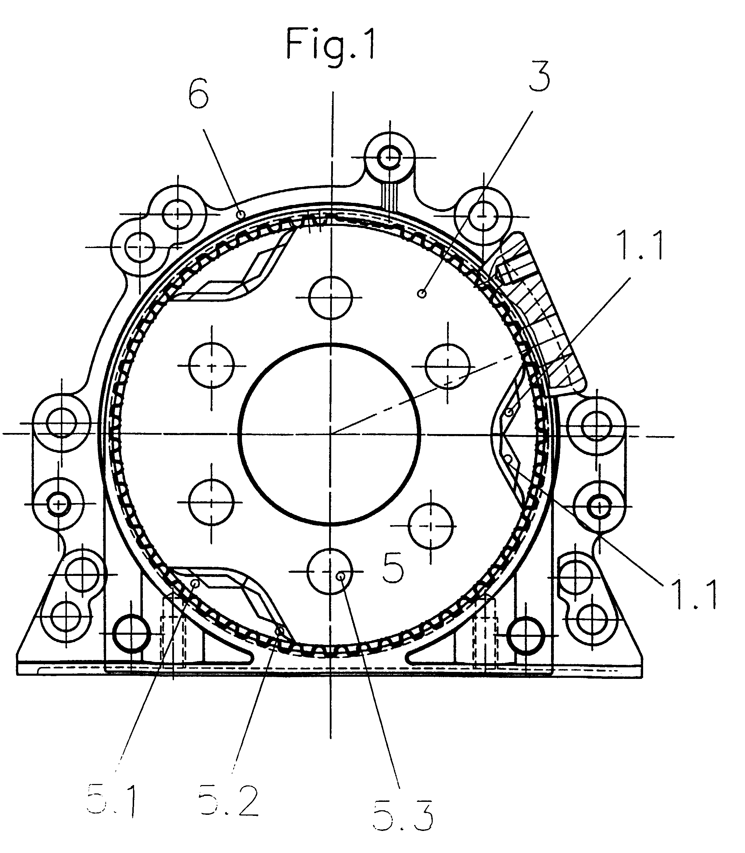

- Fig. 1: eine beispielhafte Ausbildung der Dichtungsanordnung in einer Ansicht von vorn.
- Fig. 2: die Dichtungsanordnung gemäß Fig. 1 in längsgeschnittener Darstellung und mit einer Dichtlippe aus Gummi.
- Fig. 3: einen Ausschnitt aus der Dichtungsanordnung gemäß Fig. 2 in vergrößerter Darstellung.
- Fig. 3a: eine Dichtungsanordnung analog zu Fig. 3, bei der die Dichtlippe aus PTFE besteht

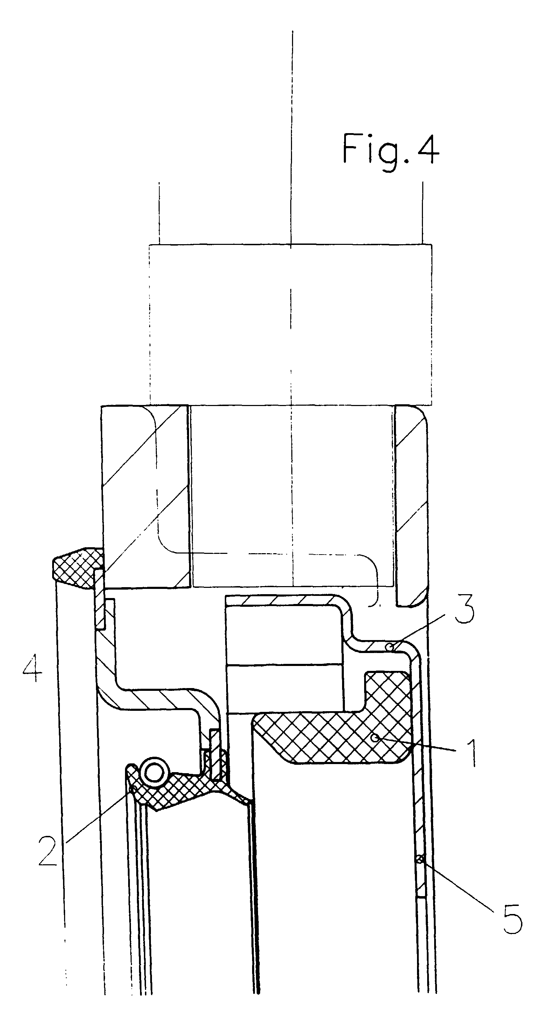

- Fig. 4: die Dichtungsanordnung gemäß Fig. 1 in längsgeschnittener Darstellung nach erfolgter Montage

Die in der Zeichnung wiedergegebene Dichtungsanordnung ist für die Abdichtung eines Wellenendes bestimmt, insbesondere eines Kurbelwellenendes. Sie umfaßt eine vor Gebrauch auf einer Stützhülse 1 abgestützte, ringförmige Dichtlippe 2 sowie einen Sensorring 3, der die Dichtlippe 2 und die Stützhülse 1 an dem von dem abgedichteten Raum 4 abgewandten Ende mit einem Flansch 5 in radialer Richtung nach innen übergreift, wobei der Sensorring, bezogen auf die Dichtlippe, axial verschiebbar ist. Die Stützhülse wird bei der gezeigten Ausbildung durch drei in Umfangsrichtung aneinanderstoßende, relativ bewegliche Segmente 1.1 gebildet, wobei die Segmente 1.1 an dem Sensorring 3 in axialer Richtung unverrückbar und in radialer Richtung nur nach außen verschiebbar festgelegt sind und wobei die Stützhülse 1 an dem dem abgedichteten Raum 4 zugewandten Ende zum erleichterten Einfügen des Wellenendes einen hohlkegelig erweiterten Innendurchmesser hat. Die radialen Führungen werden durch sich in radialer Richtung erstreckende Aufnahmen der Segmente 1.1 gebildet sowie durch Laufschienen 5.1 des Sensorrings, die von den Aufnahmen zumindest teilweise umgriffen sind. Die Laufschienen bilden einen Bestandteil des Flansches 5 des Sensorrings. Sie werden in Umfangsrichtung durch Ausstanzungen des Flansches 5 begrenzt. Der Flansch 5 ist radial innerhalb der Radialführungen mit Mitnehmerflächen versehen, die einen Bestandteil von Durchbrechungen 5.2 bilden. Letztere werden durch Bohrungen gebildet. Sie haben auch den Zweck, ein Schwungrad an das Kurbelwellenende anzukoppeln, wobei sich eine axiale Verpressung des Flansches 5 zwischen dem Schwungrad und dem Wellenende ergibt. Der Flansch 5 vermag folglich keine Relativverdrehungen, bezogen auf das Schwungrad und das Wellenende, durchzuführen.

Der Innendurchmesser der Stützhülse 1 ist in Richtung des Endes hohlkegelig erweitert und an den Außendurchmesser der Stützhülse 1 angenähert. Das Profil des Endes als solches ist gerundet ausgebildet. Die Zentrierung der Dichtungsanordnung, bezogen auf ein Wellenende, wird dadurch erleichtert und eine Beschädigung der Dichtlipppe 2 beim Aufschieben auf die Stützhülse 1 ausgeschlossen..

Der Außendurchmesser der Stützhülse 1 ist bei einem Wellendurchmesser von 80 mm 0,1 mm größer als der Außendurchmesser der durch die Dichtlippe 2 abzudichtenden Welle. Der Maßunterschied kann bis zu 0,2 mm betragen. Er genügt, um sicherzustellen, daß sich keinerlei Beschädigungen der aus polymerem Werkstoff bestehenden Dichtlippe 2 beim Aufschieben auf das Wellenende ergeben können.

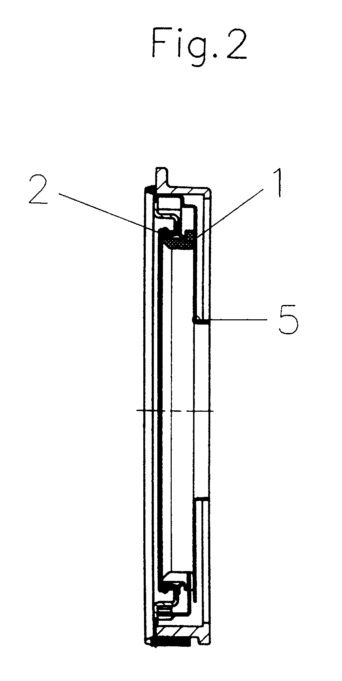

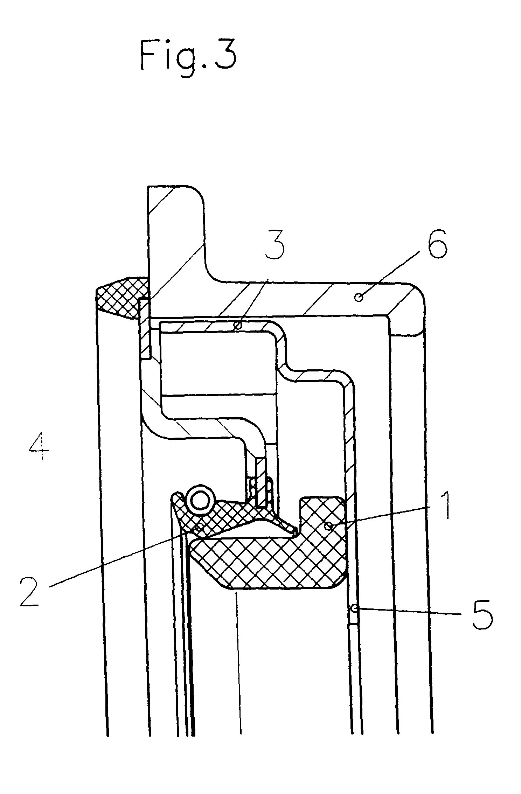

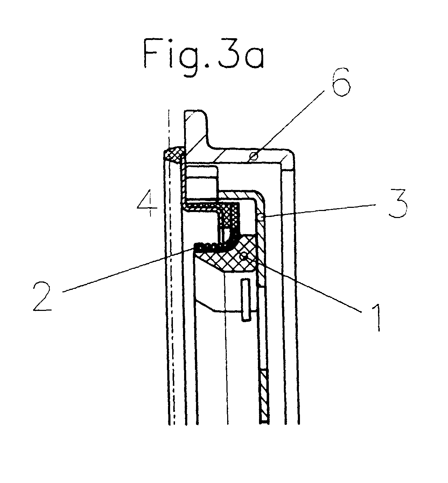

Bei der gezeigten Ausführung sind sämtliche gegen mechanische Beschädigungen empfindlichen Teile der Dichtungsanordnung im Lager- und Transportzustand von einem Außenteil 6 umschlossen, das die Gestalt eines Formteils aus metallischem Druckguß oder Kunststoff hat. Radial nach innen ist die aus polymerem Werkstoff bestehende Dichtlippe 2 durch die aus drei unabhängig voneinander beweglichen Segmenten 1.1 gebildete Stützhülse 1 geschützt. Die Dichtlippe 2 preßt die einzelnen Segmente 1.1 der Stützhülse 1 bis zur Montage in Umfangsrichtung fest aneinander, was dazu beiträgt, deren zylindrische Form zu fixieren. Die einzelnen Segmente 1.1 sind in Führungen des Sensorrings aufgenommen. Die gute Dimensionsstabilität der Stützhülse 1 überträgt sich dadurch auf den Sensorring 3, was es weitestgehend ausschließt, daß sich an diesem während der Lagerung oder des Transports Beschädigungen ergeben. Die für die Funktion entscheidenden Bestandteile des Sensorrings 3 sind zudem im Lager- und Transportzustand der Dichtungsanordnung an einer Stelle angeordnet, die relativ weit entfernt ist von dem offenen Ende des Außenteils 6 (Fig. 2, 3, 3a). Beschädigungen während der Montage sind dadurch so gut wie völlig ausgeschlossen.

## Patentansprüche

1. Dichtungsanordnung für ein Wellenende, umfassend eine vor Gebrauch auf einer Stützhülse (1) abgestützte, ringförmige Dichtlippe (2) sowie einen Sensorring (3), der die Dichtlippe (2) und die Stützhülse (1) an dem von dem abgedichteten Raum (4) abgewandten Ende mit einem Flansch (5) in radialer Richtung nach innen übergreift, wobei der Sensorring (3), bezogen auf die Dichtlippe (2), axial verschiebbar ist, dadurch gekennzeichnet, daß die Stützhülse (1) durch zumindest drei in Umfangsrichtung aneinanderstoßende, relativ bewegliche Segmente (1.1) gebildet ist, daß die Segmente (1.1) an dem Sensorring (3) in axialer Richtung unverrückbar und in radialer Richtung nach außen verschiebbar festgelegt sind und daß die Stützhülse (1) an dem dem abgedichteten Raum (4) zugewandten Ende zum erleichterten Einfügen des Wellenendes einen hohlkegelig erweiterten Innendurchmesser und/oder das Wellenende einen in entgegengesetzter Richtung kegelig verjüngten Außendurchmesser hat.

2. Dichtungsanordnung nach Anspruch 1, dadurch gekennzeichnet, daß der Sensorring (3) im Bereich des Flansches (5) mit Radialführungen zur Festlegung der Segmente (1.1) versehen ist.

3. Dichtungsanordnung nach Anspruch 2, dadurch gekennzeichnet, daß die Radialführungen durch sich in radialer Richtung erstreckende Aufnahmen der Segmente (1.1) gebildet sind sowie durch Laufschienen (5.1) des Sensorringes (3), die von den Aufnahmen zumindest teilweise umgriffen sind.

4. Dichtungsanordnung nach Anspruch 3, dadurch gekennzeichnet, daß die Laufschienen (5.1) einen Bestandteil des Flansches (5) bilden.

5. Dichtungsanordnung nach Anspruch 4, dadurch gekennzeichnet, daß die Laufschienen (5.1) zumindest in Umfangsrichtung durch Ausstanzungen (5.2) des Flansches (5) begrenzt sind.

6. Dichtungsanordnung nach Anspruch 2 bis 5, dadurch gekennzeichnet, daß der Flansch (5) radial innerhalb der Radialführungen mit zumindest einer Mitnehmerfläche versehen und durch die Mitnehmerfläche unverdrehbar an dem Ende der abzudichtenden Welle festlegbar ist.

7. Dichtungsanordnung nach Anspruch 6, dadurch gekennzeichnet, daß die Mitnehmerfläche einen Bestandteil einer Durchbrechung (5.3) bildet.

8. Dichtungsanordnung nach Anspruch 1, dadurch gekennzeichnet, daß der Innendurchmesser dem Außendurchmesser der Stützhülse (1) an dem Ende durch eine hohlkegelige Ausbildung angenähert ist.

9. Dichtungsanordnung nach Anspruch 1 bis 8, dadurch gekennzeichnet, daß der Außendurchmesser der Stützhülse (1) größer ist als der Außendurchmesser der abzudichtenden Welle.

## Claims

1. A sealing arrangement for a shaft end, comprising an annular sealing lip (2), which is supported on a supporting sleeve (1) prior to use, and a sensor ring (3), which, by way of a flange (5), engages in the radially inward direction over the sealing lip (2) and the supporting sleeve (1) at the end which is directed away from the sealed space (4), it being possible for the sensor ring (3) to be displaced axially in relation to the sealing lip (2), characterized in that the supporting sleeve (1) is formed by at least three segments (1.1) which butt against one another in the circumferential direction and can be moved relative to one another, in that the segments (1.1) are secured on the sensor ring (3) in a captive manner in the axial direction and such that they can be displaced outwards in the radial direction, and in that, in order to facilitate the insertion of the shaft end, the supporting sleeve (1) has, at the end which is directed towards the sealed space (4), an internal diameter which is widened in the manner of a hollow cone and/or the shaft end has an external diameter which tapers conically in the opposite direction.

2. A sealing arrangement according to claim 1, characterized in that, in the region of the flange (5), the sensor ring (3) is provided with radial guides for securing the segments (1.1).

3. A sealing arrangement according to claim 2, characterized in that the radial guides are formed by radially extending receiving means of the segments (1.1) and by running rails (5.1) of the sensor ring (3), the receiving means at least partially engaging around the running rails.

4. A sealing arrangement according to claim 3, characterized in that the running rails (5.1) form a constituent part of the flange (5).

5. A sealing arrangement according to claim 4, characterized in that the running rails (5.1) are bounded, at least in the circumferential direction, by punched-out sections (5.2) of the flange (5).

6. A sealing arrangement according to any of claims 2 to 5, characterized in that the flange (5) is provided, radially within the radial guides, with at least one carry-along surface and, by way of the carry-along surface, can be secured in a non-rotatable manner at the end of the shaft which is to be sealed.

7. A sealing arrangement according to claim 6, characterized in that the carry-along surface forms a constituent part of a through-passage (5.3).

8. A sealing arrangement according to claim 1, characterized in that the internal diameter is brought more into line with the external diameter of the supporting sleeve (1) at the end by a hollow-cone design.

9. A sealing arrangement according to any of claims 1 to 8, characterized in that the external diameter of the supporting sleeve (1) is larger than the external diameter of the shaft which is to be sealed.

## Revendications

1. Dispositif d'étanchéité pour un bout d'arbre d'entraînement, comprenant une lèvre d'étanchéité annulaire (2), appuyée sur une douille d'appui (1) avant utilisation, ainsi qu'une bague détectrice (3) qui recouvre vers l'intérieur dans la direction radiale, par une bride (5), la lèvre d'étanchéité (2) et la douille d'appui (1) sur l'extrémité opposée à l'espace rendu étanche (4), la bague détectrice (3) étant déplaçable axialement par rapport à la lèvre d'étanchéité (2), caractérisé en ce que la douille d'appui (1) est formée par au moins trois segments (1.1) relativement mobiles, contigus dans la direction circonférentielle, en ce que les segments (1;1) sont fixés à la bague détectrice (3) de façon immuable dans la direction axiale et de façon déplaçable vers l'extérieur dans la direction radiale et en ce que la douille d'appui (1) possède sur l'extrémité orientée vers l'espace rendu étanche (4) un diamètre intérieur élargi en forme de cône creux pour une insertion facilitée du bout d'arbre d'entraînement et/ou le bout d'arbre d'entraînement possède un diamètre extérieur rétréci en forme de cône dans le sens opposé.

2. Dispositif d'étanchéité selon la revendication 1, caractérisé en ce que la bague détectrice (3) est dotée dans la zone de la bride (5) de glissières de guidage radiales pour la fixation des segments (1.1).

3. Dispositif d'étanchéité selon la revendication 2, caractérisé en ce que les glissières de guidage radiales sont formées par des logements, des segments (1.1), s'étendant dans la direction radiale, ainsi que par des rails de roulement (5.1) de la bague détectrice (3) qui sont enveloppés au moins partiellement par les logements.

4. Dispositif d'étanchéité selon la revendication 3, caractérisé en ce que les rails de roulement (5.1) forment une partie constitutive de la bride (5).

5. Dispositif d'étanchéité selon la revendication 4, caractérisé en ce que les rails de roulement (5.1) sont limités au moins dans la direction circonférentielle par des découpes réalisées à la matrice (5.2) de la bride (5).

6. Dispositif d'étanchéité selon les revendications 2 à 5, caractérisé en ce que la bride (5) est dotée radialement à l'intérieur des glissières de guidage radiales d'au moins une surface d'entraînement et peut être fixée par la surface d'entraînement sans pouvoir tourner à l'extrémité de l'arbre à rendre étanche.

7. Dispositif d'étanchéité selon la revendication 6, caractérisé en ce que la surface d'entraînement forme une partie constitutive d'une découpure (5.3).

8. Dispositif d'étanchéité selon la revendication 1, caractérisé en ce que le diamètre intérieur est proche du diamètre extérieur de la douille d'appui (1) à l'extrémité du fait d'une configuration en forme de cône creux.

9. Dispositif d'étanchéité selon les revendications 1 à 8, caractérisé en ce que le diamètre extérieur de la douille d'appui (1) est plus grand que le diamètre extérieur de l'arbre à rendre étanche.
